# EUROPEAN PATENT SPECIFICATION

(11) **EP 3 337 024 B1**
(45) Date of publication and mention of the grant of the patent: **10.03.2021**
(21) Application number: 16863333.7
(22) Date of filing: 29.04.2016
(51) Int. Cl.: H02M 3/335, H02M 3/28, H02M 1/00, H02M 1/14, H02J 1/10

(54) **BIDIRECTIONAL RESONANT CONVERSION CIRCUIT AND CONVERTER**
BIDIREKTIONALE RESONANZWANDLERSCHALTUNG UND WANDLER
CIRCUIT DE CONVERSION RÉSONANT BIDIRECTIONNEL ET CONVERTISSEUR

(30) Priority: 12.11.2015 CN 201510772819
(43) Date of publication of application: 20.06.2018
(73) Proprietor: Huawei Technologies Co., Ltd., Longgang District Shenzhen, Guangdong 518129 (CN)
(72) Inventor: ZHOU, Kui, Shenzhen Guangdong 518129 (CN); ZHANG, Xijun, Shenzhen Guangdong 518129 (CN); TORRICO-BASCOPE, Grover Victor, Shenzhen Guangdong 518129 (CN)
(74) Representative: Kreuz, Georg Maria
(86) International application number: PCT/CN2016/080688
(87) International publication number: WO 2017/080143

(56) References cited:
- EP-A1- 2 887 523
- CN-A- 101 841 244
- CN-A- 102 545 582
- CN-A- 102 790 533
- CN-A- 103 683 964
- JP-A- 2005 020 948
- US-A1- 2015 180 330
- US-A1- 2015 295 497
- MIRZAHOSSEINI R ET AL: "A phase-shift three-phase bidirectional series resonant DC/DC converter", IECON 2011 - 37TH ANNUAL CONFERENCE ON IEEE INDUSTRIAL ELECTRONICS SOCIETY, IEEE, 7 November 2011 (2011-11-07), pages 1137-1143, XP032104643, DOI: 10.1109/IECON.2011.6119468 ISBN: 978-1-61284-969-0
- ZHAO BIAO ET AL: "Overview of Dual-Active-Bridge Isolated Bidirectional DC-DC Converter for High-Frequency-Link Power-Conversion System", IEEE TRANSACTIONS ON POWER ELECTRONICS, INSTITUTE OF ELECTRICAL AND ELECTRONICS ENGINEERS, USA, vol. 29, no. 8, 8 November 2013 (2013-11-08), pages 4091-4106, XP011544126, ISSN: 0885-8993, DOI: 10.1109/TPEL.2013.2289913 [retrieved on 2014-03-26]

## Description

### TECHNICAL FIELD

The present invention relates to the field of electronic technologies, and in particular, to a bidirectional resonant conversion circuit and a converter.

### BACKGROUND

A multiphase resonant converter is used more frequently, so as to obtain a high-power, high-efficiency, and high-density rectifier. There is an increasing application demand for the multiphase resonant converter in fields of photovoltaic inverters, communications energy, and electric vehicles.

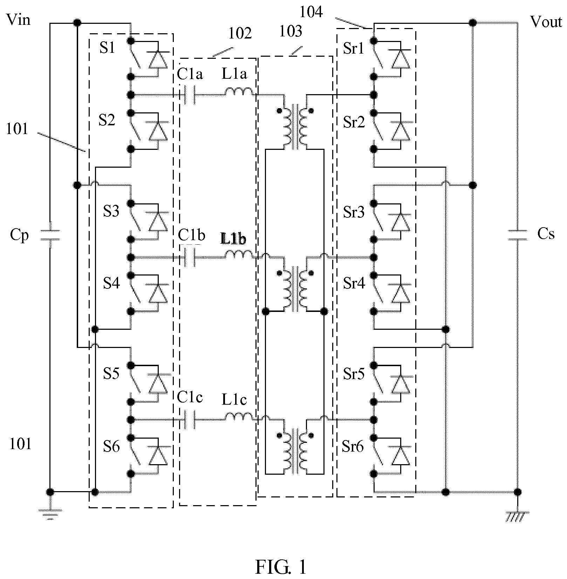

The following describes a three-phase resonant converter in the prior art with reference to FIG. 1, and the three-phase resonant converter includes three primary side bridge arms 101, three two-port resonant cavities 102, three transformers 103, and three secondary side bridge arms 104.

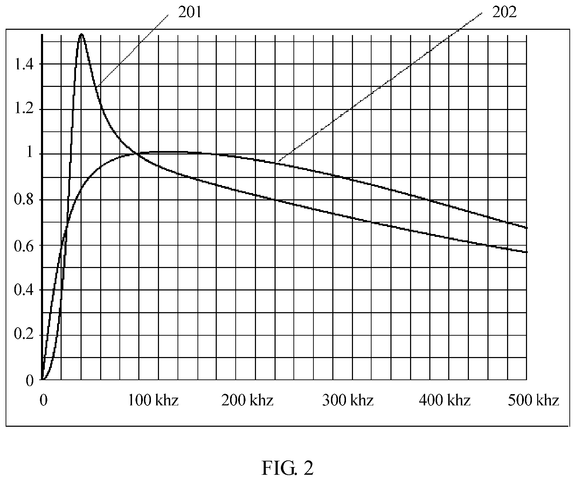

Bidirectional energy conversion can be implemented by using the three-phase resonant converter provided in the prior art. However, as shown in FIG. 2, a rectification gain curve 201 and an inverse gain curve 202 that are of the three-phase resonant converter provided in FIG. 1 are inconsistent, and the inverse gain curve is not monotonic, thereby causing complex control and low reliability.
The EP Patent Application EP2887523 discloses a resonant bidirectional converter. The resonant bidirectional converter provided in this embodiment includes: a filter capacitor, primary side bridge arms, a resonant cavity, transformers, and secondary side bridge arms. The resonant cavity includes three inductor-capacitor circuits, one end of each of the three inductor-capacitor circuits is connected to the first connection point of each of the three primary side bridge arms on a one-to-one basis, and the other end of each of the three inductor-capacitor circuits is connected to a primary side of each of the three transformers 14 on a one-to-one basis. Mirzahosseini R et al. "A phase- shift there-phase bidirectional series resonant DC/DC converter" discloses Phase-shift three-phase bidirectional series resonant converter includes LC circuit which has two port, one is connected primary side bridge arms of Primary and the other is connected to Secondary. US Patent Application US2015180330 discloses that Power factor correction (PFC) apparatus, controllers, and methods for operating bridgeless totem pole power factor correction converters. AC input voltage polarity is detected for designation of active and freewheeling switches of the totem pole circuit, a nominal freewheeling switch on-time is determined according to a Volt×Second balance relationship, and the voltage across the designated active switch is sensed and used to selectively modify or offset the nominal freewheeling switch on-time to provide a computed freewheeling switch on-time for the next switching cycle to facilitate zero voltage switching of the active switch. US Patent Application US2015295497 discloses that a power converter for converting DC power to DC power includes an inverter stage having two or more switched inverters configured to receive DC power from a source and produce a switched AC output power signal. A transformation stage is coupled to receive the switched output power signal from the inverter stage, shape the output power signal, and produce a shaped power signal. A controller circuit is coupled to operate the power converter in a variable frequency multiplier mode where at least one of the switched inverters is switched at a frequency or duty cycle that results in an output signal having a frequency that is a harmonic of the fundamental frequency being generated by the power converter. Zhao Biao et al, "Overview of Dual-Active-Bridge isolated Bidirectional DC-DC Converter for high-Frequency -Link power- Conversion Sy", discloses an overview of DAB-IBDC for HFL PCSs. As the core circuit of HFL PCSs, DAB-IBDC for HFL PCSs is expected with the recent advances in solid-state semiconductors, magnetic and capacitive materials, and microelectronic technologies.

### SUMMARY

The present invention provides a bidirectional resonant conversion circuit according to claim 1. Advantageous aspects of the invention are recited by the dependent claims.

By using the bidirectional resonant conversion circuit provided by the present invention, bidirectional conversion can be conveniently implemented. In addition, a rectification gain curve and an inverse gain curve are almost consistent, control is easy, reliability is high, and natural current sharing can also be implemented. This avoids adding an extra current sharing circuit, thereby reducing costs.

### BRIEF DESCRIPTION OF DRAWINGS

FIG. 1 is a schematic diagram of a circuit structure of a three-phase resonant converter provided in the prior art;
FIG. 2 is a schematic diagram of a rectification gain curve and an inverse gain curve that are of the three-phase resonant converter shown in FIG. 1;
FIG. 3 is a schematic diagram of a circuit structure of a bidirectional resonant conversion circuit according to an embodiment of the present invention;
FIG. 4 is a schematic diagram of another circuit structure of a bidirectional resonant conversion circuit according to an embodiment of the present invention;
FIG. 5 is a schematic diagram of still another circuit structure of a bidirectional resonant conversion circuit according to an embodiment of the present invention;
FIG. 6 is a schematic diagram of a rectification gain curve and an inverse gain curve that are of a bidirectional resonant conversion circuit according to an embodiment of the present invention;
FIG. 7 is a waveform diagram of a current output by a bidirectional resonant conversion circuit according to an embodiment of the present invention; and
FIG. 8 is a schematic diagram of a circuit structure of a converter according to an embodiment of the present invention.

### DESCRIPTION OF EMBODIMENTS

First, an application scenario of a bidirectional resonant conversion circuit provided in the embodiments is exemplarily described.

The bidirectional resonant conversion circuit provided in the embodiments can be used in a DC/DC part of a communications power supply, a vehicle-mounted power supply, a photovoltaic inverter, or the like.

In addition, according to the bidirectional resonant conversion circuit provided in the embodiments, conversion of voltage at two ends of the bidirectional resonant conversion circuit can be implemented in a case in which a circuit structure is not changed.

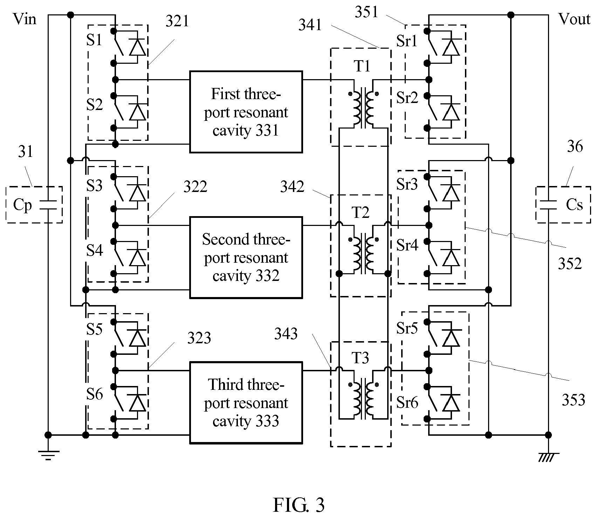

First, a bidirectional resonant conversion circuit provided in an embodiment of the present invention is described with reference to FIG. 3.

The bidirectional resonant conversion circuit includes a primary capacitor 31, three primary side bridge arms, three three-port resonant cavities, three transformers, three secondary side bridge arms, and a secondary capacitor 36.

Specifically, the three primary side bridge arms included in the bidirectional resonant conversion circuit are a first primary side bridge arm 321, a second primary side bridge arm 322, and a third primary side bridge arm 323.

The three three-port resonant cavities included in the bidirectional resonant conversion circuit are a first three-port resonant cavity 331, a second three-port resonant cavity 332, and a third three-port resonant cavity 333.

The three transformers included in the bidirectional resonant conversion circuit are a first transformer 341, a second transformer 342, and a third transformer 343.

The three secondary side bridge arms included in the bidirectional resonant conversion circuit are a first secondary side bridge arm 351, a second secondary side bridge arm 352, and a third secondary side bridge arm 353.

Two ends of each primary side bridge arm are respectively connected to two ends of the primary capacitor 31.

That is, two ends of the first primary side bridge arm 321, two ends of the second primary side bridge arm 322, and two ends of the third primary side bridge arm 323 are separately connected to the two ends of the primary capacitor 31.

The three primary side bridge arms are in a one-to-one correspondence with the three three-port resonant cavities, and primary-side windings of the three transformers are in a one-to-one correspondence with the three three-port resonant cavities.

Specifically, the first three-port resonant cavity 331 is separately corresponding to the first primary side bridge arm 321 and the first transformer 341;
the second three-port resonant cavity 332 is separately corresponding to the second primary side bridge arm 322 and the second transformer 342; and
the third three-port resonant cavity 333 is separately corresponding to the third primary side bridge arm 323 and the third transformer 343.

Each three-port resonant cavity includes a first group of inductor and capacitor, a second group of inductor and capacitor, and a third group of inductor and capacitor.

The inductor and capacitor included in the three-port resonant cavity may determine a resonance frequency of the three-port resonant cavity.

Each three-port resonant cavity has three ports.

The following describes electrical connection structures of the three-port resonant cavities.

A first port of each three-port resonant cavity is connected to a corresponding primary side bridge arm.

A second port of each three-port resonant cavity is connected to a ground terminal of a corresponding primary side bridge arm.

A third port of each three-port resonant cavity is connected to a corresponding transformer.

Specifically, a first port of the first three-port resonant cavity 331 is connected to the first primary side bridge arm 321, a second port of the first three-port resonant cavity 331 is connected to a ground terminal of the first primary side bridge arm 321, and a third port of the first three-port resonant cavity 331 is connected to the first transformer 341;
a first port of the second three-port resonant cavity 332 is connected to the second primary side bridge arm 322, a second port of the second three-port resonant cavity 332 is connected to a ground terminal of the second primary side bridge arm 322, and a third port of the second three-port resonant cavity 332 is connected to the second transformer 342; and
a first port of the third three-port resonant cavity 333 is connected to the third primary side bridge arm 323, a second port of the third three-port resonant cavity 333 is connected to a ground terminal of the third primary side bridge arm 323, and a third port of the third three-port resonant cavity 333 is connected to the third transformer 343.

Two ends of each secondary side bridge arm are respectively connected to two ends of the secondary capacitor 36.

Secondary-side windings of the three transformers are in a one-to-one correspondence with the three secondary side bridge arms, and each transformer is connected to a corresponding secondary side bridge arm.

Specifically, the first transformer 341 is connected to the first secondary side bridge arm 351, the second transformer 342 is connected to the second secondary side bridge arm 352, and the third transformer 343 is connected to the third secondary side bridge arm 353.

More specifically, two ends of the first secondary side bridge arm 351, two ends of the second secondary side bridge arm 352, and two ends of the third secondary side bridge arm 353 are separately connected to the two ends of the secondary capacitor 36.

The following continues to describe an internal electrical connection structure of the bidirectional resonant conversion circuit in detail with reference to the accompanying drawings.

First, specific structures of the primary side bridge arms are described in detail with reference to FIG. 3.

As shown in FIG. 3, each primary side bridge arm includes two semiconductor switching transistors that are connected in series in a same direction.

Specifically, the first primary side bridge arm 321 includes a semiconductor switching transistor S1 and a semiconductor switching transistor S2 that are connected in series in a same direction;
the second primary side bridge arm 322 includes a semiconductor switching transistor S3 and a semiconductor switching transistor S4 that are connected in series in a same direction; and
the third primary side bridge arm 323 includes a semiconductor switching transistor S5 and a semiconductor switching transistor S6 that are connected in series in a same direction.

More specifically, a semiconductor switching transistor included on each primary side bridge arm may be a metal-oxide semiconductor field-effect transistor (MOSFET), or an insulated gate bipolar transistor IGBT.

With reference to FIG. 3, the following continues to describe in detail how the primary side bridge arms specifically connect to the three-port resonant cavities.

A node between the two semiconductor switching transistors that are on the primary side bridge arm and connected in series in a same direction is a first node.

Specifically, a node between the semiconductor switching transistor S1 and the semiconductor switching transistor S2 that are on the first primary side bridge arm 321 and connected in series in a same direction is a first node;
a node between the semiconductor switching transistor S3 and the semiconductor switching transistor S4 that are on the second primary side bridge arm 322 and connected in series in a same direction is a first node; and
a node between the semiconductor switching transistor S5 and the semiconductor switching transistor S6 that are on the third primary side bridge arm 323 and connected in series in a same direction is a first node.

A first port of each three-port resonant cavity is connected to a first node of a corresponding primary side bridge arm.

Specifically, the first port of the first three-port resonant cavity 331 is connected to the first node of the first primary side bridge arm 321;
the first port of the second three-port resonant cavity 332 is connected to the first node of the second primary side bridge arm 322; and
the first port of the third three-port resonant cavity 333 is connected to the first node of the third primary side bridge arm 323.

The following continues to describe specific structures of the transformers with reference to FIG. 3.

Each transformer includes one primary-side winding and one secondary-side winding, undotted terminals of the primary-side windings of the three transformers are connected together, or dotted terminals of the primary-side windings of the three transformers are connected together; and undotted terminals of the secondary-side windings of the three transformers are connected together, or dotted terminals of the secondary-side windings of the three transformers are connected together.

The following describes how the transformers specifically implement electrical connection to the three-port resonant cavities and the secondary side bridge arms.

Specifically, a third port of each three-port resonant cavity is connected to a primary-side winding of a corresponding transformer.

More specifically, the third port of the first three-port resonant cavity 331 is connected to a primary-side winding of the first transformer 341;
the third port of the second three-port resonant cavity 332 is connected to a primary-side winding of the second transformer 342; and
the third port of the third three-port resonant cavity 333 is connected to a primary-side winding of the third transformer 343.

Structures of the secondary side bridge arms are first described, so as to describe how the transformers specifically perform electrical connection to the secondary side bridge arms.

Each secondary side bridge arm includes two semiconductor switching transistors that are connected in series in a same direction, and a node between two semiconductor switching transistors that are on a secondary side bridge arm and connected in series in a same direction is a second node.

Specifically, the first secondary side bridge arm 351 includes two semiconductor switching transistors Sr1 and Sr2 that are connected in series in a same direction, and a node between the semiconductor switching transistors Sr1 and Sr2 is a second node;
the second secondary side bridge arm 352 includes two semiconductor switching transistors Sr3 and Sr4 that are connected in series in a same direction, and a node between the semiconductor switching transistors Sr3 and Sr4 is a second node; and
the third secondary side bridge arm 353 includes two semiconductor switching transistors Sr5 and Sr6 that are connected in series in a same direction, and a node between the semiconductor switching transistors Sr5 and Sr6 is a second node.

A semiconductor switching transistor included on each secondary side bridge arm may be a metal-oxide semiconductor field-effect transistor MOSFET, or an insulated gate bipolar transistor IGBT.

An electrical connection structure between the transformer and the secondary side bridge arm is:
a secondary-side winding of each transformer is connected to a second node of a corresponding secondary side bridge arm.

Specifically, a secondary-side winding of the first transformer 341 is connected to the second node of the first secondary side bridge arm 351;
the secondary-side winding of the second transformer 342 is connected to the second node of the second secondary side bridge arm 352; and
the secondary-side winding of the third transformer 343 is connected to the second node of the third secondary side bridge arm 353.

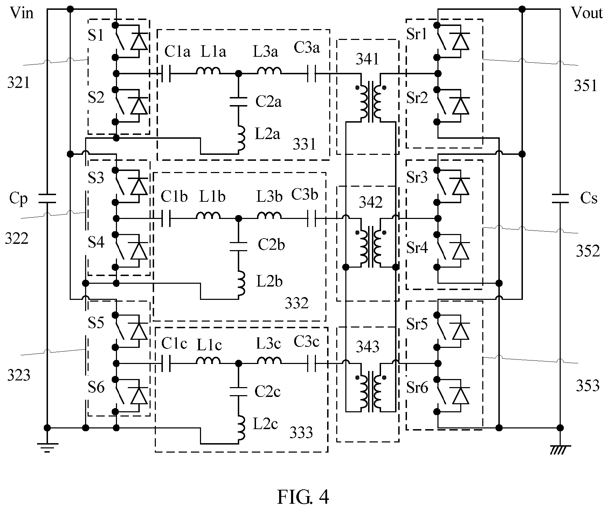

The following describes specific structures of the three-port resonant cavities with reference to FIG. 4.

Each three-port resonant cavity includes a first group of inductor and capacitor, a second group of inductor and capacitor, and a third group of inductor and capacitor.

First, the first three-port resonant cavity 331 is used as an example for description.

The first three-port resonant cavity 331 includes a first group of inductor and capacitor, a second group of inductor and capacitor, and a third group of inductor and capacitor.

Specifically, the first group of inductor and capacitor includes a first inductor L1a and a first capacitor C1a that are mutually connected in series, the second group of inductor and capacitor includes a second inductor L2a and a second capacitor C2a that are mutually connected in series, the third group of inductor and capacitor includes a third inductor L3a and a third capacitor C3a that are mutually connected in series.

More specifically, a first end of the first group of inductor and capacitor is used as the first port of the three-port resonant cavity, so that the first three-port resonant cavity 331 is connected to the first node by using the first port.

In this embodiment, FIG. 4 is used as an example, that is, the first end of the first group of inductor and capacitor is a first end of the first capacitor C1a, that is, the first end of the first capacitor C1a is connected to the first node.

A second end of the first capacitor C1a is connected to a first end of the first inductor LI a when the first end of the first group of inductor and capacitor is the first end of the first capacitor C1a.

A second end of the first inductor L1a is used as a second end of the first group of inductor and capacitor.

It should be noted that, in this embodiment, the example in which the first end of the first group of inductor and capacitor is the first end of the first capacitor C1a is used for exemplary description, and is not intended for limitation. For another example, the first end of the first group of inductor and capacitor is the first end of the first inductor L1a, and in this case, the second end of the first inductor L1a is connected to the first end of the first capacitor C1a, and the second end of the first capacitor C1a is used as the second end of the first group of inductor and capacitor.

The second group of inductor and capacitor includes the second inductor L2a and the second capacitor C2a that are connected in series.

A first end of the second group of inductor and capacitor is used as the second port of the three-port resonant cavity, so that the first three-port resonant cavity 331 is connected to the ground terminal of the first primary side bridge arm 321 by using the second port.

In this embodiment, FIG. 4 is used as an example, and the first end of the second group of inductor and capacitor is a first end of the second inductor L2a, that is, the first end of the second inductor L2a is connected to the ground terminal of the first primary side bridge arm 321.

A second end of the second inductor L2a is connected to a first end of the second capacitor C2a when the first end of the second group of inductor and capacitor is the first end of the second inductor L2a.

A second end of the second capacitor C2a is used as a second end of the second group of inductor and capacitor.

It should be noted that, in this embodiment, the example in which the first end of the second group of inductor and capacitor is the first end of the second inductor L2a is used for exemplary description, and is not intended for limitation. For another example, the first end of the second group of inductor and capacitor is the first end of the second capacitor C2a, and in this case, the first end of the second capacitor C2a is connected to the ground terminal of the first primary side bridge arm 321, the second end of the second capacitor C2a is connected to the first end of the second inductor L2a, and the second end of the second inductor L2a is used as the second end of the second group of inductor and capacitor.

The third group of inductor and capacitor includes the third inductor L3a and the third capacitor C3a that are mutually connected in series.

A first end of the third group of inductor and capacitor is used as the third port of the three-port resonant cavity, so that the first three-port resonant cavity 331 is connected to the first transformer 341 by using the third port.

In this embodiment, FIG. 4 is used as an example, and the first end of the third group of inductor and capacitor is a first end of the third capacitor C3a, that is, the first end of the third capacitor C3a is connected to the first transformer 341.

A second end of the third capacitor C3a is connected to a first end of the third inductor L3a when the first end of the third group of inductor and capacitor is the first end of the third capacitor C3a.

A second end of the third inductor L3a is used as a second end of the third group of inductor and capacitor.

It should be noted that, in this embodiment, the example in which the first end of the third group of inductor and capacitor is the first end of the third capacitor C3a is used for exemplary description, and is not intended for limitation. For another example, the first end of the third group of inductor and capacitor is the first end of the third inductor, and in this case, the second end of the third inductor is connected to the first end of the third capacitor C3a, and the second end of the third capacitor C3a is used as the second end of the third group of inductor and capacitor.

As shown in FIG. 4, the second end of the first group of inductor and capacitor, the second end of the second group of inductor and capacitor, and the second end of the third group of inductor and capacitor are connected to each other.

In this example, for specific description of the second three-port resonant cavity 332 and the third three-port resonant cavity 333, refer to the specific description of the first three-port resonant cavity 331, which is not described in detail herein.

With reference to FIG. 4, the following describes a current direction of the bidirectional resonant conversion circuit provided in this embodiment.

As shown in FIG. 4, input direct current voltage is input to the primary side bridge arm.

Two switching transistors included on the primary side bridge arm are alternately connected or disconnected, so that the input direct current voltage is converted to square waves, and the square waves are fed in the three-port resonant cavity.

Then the three-port resonant cavity transmits voltage to the secondary side bridge arm by using the transformer.

Two switching transistors included on the secondary side bridge arm are alternately connected or disconnected, so that periodically output voltage waveform is rectified, and direct current voltage needed by a user is output.

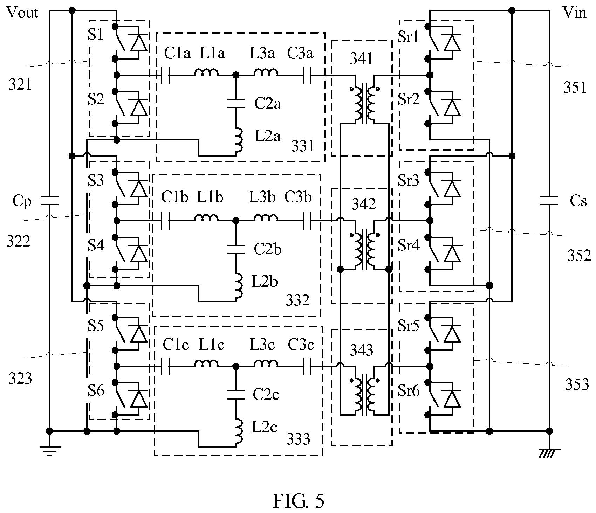

As shown in FIG. 5, a difference between bidirectional resonant conversion circuits shown in FIG. 4 and FIG. 5 lies in that: in the bidirectional resonant conversion circuit shown in FIG. 4, input direct current voltage is input to the primary side bridge arm; and in the bidirectional resonant conversion circuit shown in FIG. 5, input direct current voltage is input to the secondary side bridge arm.

For a specific circuit structure of the bidirectional resonant conversion circuit shown in FIG. 5, refer to the description of FIG. 4, and details are not described herein.

As shown in FIG. 5, input direct current voltage is input to the secondary side bridge arm.

Two switching transistors included on the primary side bridge arm are alternately connected or disconnected, so that the input direct current voltage is converted to square waves.

The secondary side bridge arm feeds the square waves in the three-port resonant cavity by using the transformer.

Then the three-port resonant cavity transmits voltage to the primary side bridge arm

Two switching transistors included on the primary side bridge arm are alternately connected or disconnected, so that the periodically output voltage waveform is rectified, and direct current voltage needed by a user is output.

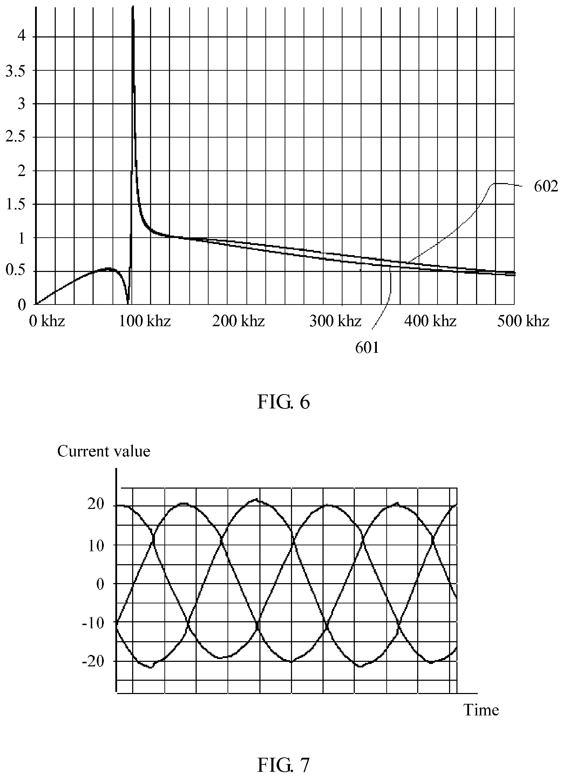

An advantage of using this embodiment of the present invention lies in that:
first, referring to FIG. 6, it may be known that a rectification gain curve 601 and an inverse gain curve 602 are almost consistent when the bidirectional resonant conversion circuit provided in this embodiment is used, and bidirectional conversion can be easily implemented; the rectification gain curve 601 and the inverse gain curve 602 that are of the bidirectional resonant conversion circuit are almost consistent, and therefore control is easy and reliability is high;
in addition, dotted terminals or undotted terminals of transformers of the bidirectional resonant conversion circuit provided in this embodiment are connected, so that natural current sharing can be implemented according to the bidirectional resonant conversion circuit provided in this embodiment, thereby avoiding adding an extra current sharing circuit, reducing costs, and increasing the reliability.

For a waveform diagram of a current output by the bidirectional resonant conversion circuit provided in this embodiment, refer to FIG. 7.

According to the bidirectional resonant conversion circuit provided in this embodiment, an output ripple current can be greatly reduced, a quantity of output filter capacitors is decreased, costs are reduced, and a module size is reduced.

In addition, conversion efficiency of a bidirectional converter is improved by using the bidirectional resonant conversion circuit provided in this embodiment, thereby improving product competitiveness.

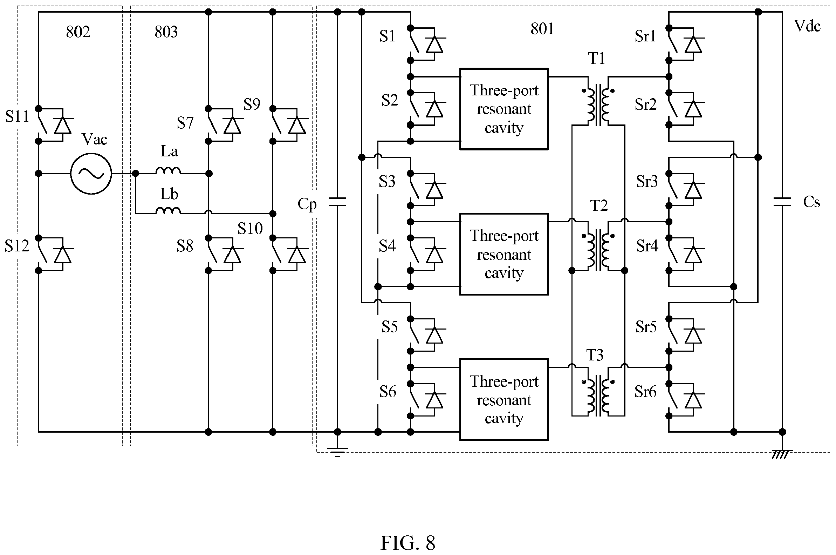

An embodiment of the present invention further provides a converter. As shown in FIG. 8, the converter includes a power factor correction PFC circuit and a bidirectional resonant conversion circuit 801.

The power factor correction PFC circuit and the bidirectional resonant conversion circuit 801 are connected in series.

The following describes a specific structure of the power factor correction PFC circuit with reference to FIG. 8.

As shown in FIG. 8, the power factor correction PFC circuit includes a power supply module 802 and a power module 803.

Specifically, the power supply module 802 is connected to the power module 803, and the power supply module 802 is configured to provide electric energy for the power module 803.

Specifically, the power module 803 includes at least one PFC circuit, each PFC circuit includes one inductor and one pair of first semiconductor switching transistors, a first end of the inductor is connected to the power supply module 802, and a second end of the inductor is separately connected to two ends of a primary capacitor by using the first semiconductor switching transistors.

More specifically, FIG. 8 is used as an example. In this embodiment, an example in which the power module 803 includes two PFC circuits is used as an example for exemplary description. That is, in this embodiment, the power module 803 includes a first PFC circuit and a second PFC circuit.

The first PFC circuit includes an inductor La and a pair of first semiconductor switching transistors, where the first semiconductor switching transistors are an S7 and an S8.

A first end of the inductor La is connected to the power supply module 802, and a second end of the inductor La is separately connected to the two ends of the primary capacitor Cp by using the S7 and the S8.

The second PFC circuit includes an inductor Lb and a pair of first semiconductor switching transistors, where the first semiconductor switching transistors are an S9 and an S10.

A first end of the inductor Lb is connected to the power supply module 802, and a second end of the inductor Lb is separately connected to the two ends of the primary capacitor Cp by using the S9 and the S10.

The power supply module 802 includes an alternating current power supply and two second semiconductor switching transistors.

Specifically, a first end of each second semiconductor switching transistor is connected to the alternating current power supply, and a second end of each second semiconductor switching transistor is connected to one of the pair of first semiconductor switching transistors of the power module.

More specifically, as shown in FIG. 8, the two second semiconductor switching transistors described in this embodiment are an S11 and an S12, where a first end of the S11 is connected to the alternating current power supply Vac, a second end of the S11 is connected to one of the first semiconductor switching transistors S7 and S8; and
a first end of the S12 is connected to the alternating current power supply Vac, a second end of the S12 is connected to one of the first semiconductor switching transistors S9 and S10.

For a specific circuit structure of the bidirectional resonant conversion circuit 801, refer to FIG. 4 to FIG. 5, and details are not described in this embodiment.

A solution of a complete set of bidirectional conversion between an alternating current (ac) voltage and a direct current (dc) voltage can be implemented by using the converter provided in this embodiment.

A field to which the converter is specifically applied is not limited in this embodiment, as long as a complete set of bidirectional conversion between an alternating current (ac) voltage and a direct current (dc) voltage can be implemented by using the converter. For example, the converter provided in this embodiment can be used in a vehicle-mounted charging system, and can also be used a field of communications energy, photovoltaic inverters, or the like.

It may be clearly understood by persons skilled in the art that, for the purpose of convenient and brief description, for a detailed working process of the foregoing system, apparatus, and unit, reference may be made to a corresponding process in the foregoing method embodiments, and details are not described herein.

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present invention as defined by the appended claims.

## Claims

1. A bidirectional resonant conversion circuit, comprising: a primary capacitor (31), three primary side bridge arms (321, 322, 323), three three-port resonant cavities (331, 332, 333), three transformers (341, 342, 343), three secondary side bridge arms (351, 352, 353), and a secondary capacitor (36), wherein
two ends of each primary side bridge arm (321, 322, 323) are respectively connected to two ends of the primary capacitor (31), the three primary side bridge arms are in a one-to-one correspondence with the three three-port resonant cavities (331, 332, 333), and primary-side windings of the three transformers (341, 342, 343) are in a one-to-one correspondence with the three three-port resonant cavities;
each three-port resonant cavity (331, 332, 333) has three ports, a first port of each three-port resonant cavity is connected to a corresponding primary side bridge arm (321, 322, 323), a second port of each three-port resonant cavity is connected to a ground terminal of a corresponding primary side bridge arm, and a third port of each three-port resonant cavity is connected to a corresponding transformer (341, 342, 343); and
two ends of each secondary side bridge arm (351, 352, 353) are respectively connected to two ends of the secondary capacitor (36), secondary-side windings of the three transformers (341, 342, 343) are in a one-to-one correspondence with the three secondary side bridge arms, and each transformer (341, 342, 343) is connected to a corresponding secondary side bridge arm;
wherein each three-port resonant cavity (331, 332, 333) comprises a first group of inductor and capacitor, a second group of inductor and capacitor, and a third group of inductor and capacitor, wherein
the first group of inductor and capacitor comprises a first inductor (LI a) and a first capacitor (C1a) that are connected in series, a first end of the first group of inductor and capacitor is used as the first port of the three-port resonant cavity (331, 332, 333), and the first end of the first group of inductor and capacitor is a first end of the first capacitor or a first end of the first inductor;
the second group of inductor and capacitor comprises a second inductor (L2a) and a second capacitor (C2a) that are connected in series, a first end of the second group of inductor and capacitor is used as the second port of the three-port resonant cavity (331, 332, 333), and the first end of the second group of inductor and capacitor is a first end of the second capacitor (C2a) or a first end of the second inductor (L2a);
the third group of inductor and capacitor comprises a third inductor (L3a) and a third capacitor (C3a) that are connected in series, a first end of the third group of inductor and capacitor is used as the third port of the three-port resonant cavity (331, 332, 333), and the first end of the third group of inductor and capacitor is a first end of the third capacitor or a first end of the third inductor; and
a second end of the first group of inductor and capacitor, a second end of the second group of inductor and capacitor, and a second end of the third group of inductor and capacitor are connected to each other.

2. The bidirectional resonant conversion circuit according to claim 1, wherein each primary side bridge arm (321, 322, 323) comprises two semiconductor switching transistors (S1, S2, S3, S4) that are connected in series in a same direction, a node between the two semiconductor switching transistors that are on the primary side bridge arm and connected in series in a same direction is a first node, and a first port of each three-port resonant cavity (331, 332, 333) is connected to a first node of a corresponding primary side bridge arm.

3. The bidirectional resonant conversion circuit according to any one of claims 1 to 2, wherein each secondary side bridge arm (351, 352, 353) comprises two semiconductor switching transistors that are connected in series in a same direction, a node between the two semiconductor switching transistors that are on the secondary side bridge arm and connected in series in a same direction is a secondary node, and a secondary-side winding of each transformer (341, 342, 343) is connected to a second node of a corresponding secondary side bridge arm.

4. The bidirectional resonant conversion circuit according to claim 2 or 3, wherein the semiconductor switching transistor (S1, ... S4) is a metal-oxide semiconductor field-effect transistor, MOSFET, or an insulated gate bipolar transistor, IGBT.

5. The bidirectional resonant conversion circuit according to any one of claims 1 to 4, wherein each transformer (341, 342, 343) comprises one primary-side winding and one secondary-side winding, the third port of each three-port resonant cavity (331, 332, 333) is connected to the primary-side winding of the corresponding transformer (341, 342, 343), undotted terminals of the primary-side windings of the three transformers are connected together, and undotted terminals of the secondary-side windings of the three transformers are connected together.

6. The bidirectional resonant conversion circuit according to any one of claims 1 to 4, wherein each transformer (341, 342, 343) comprises one primary-side winding and one secondary-side winding, the third port of each three-port resonant cavity (331, 332, 333) is connected to the primary-side winding of the corresponding transformer, undotted terminals of the primary-side windings of the three transformers are connected together, and dotted terminals of the secondary-side windings of the three transformers are connected together.

7. The bidirectional resonant conversion circuit according to any one of claims 1 to 4, wherein each transformer (341, 342, 343) comprises one primary-side winding and one secondary-side winding, the third port of each three-port resonant cavity (331, 332, 333) is connected to the primary-side winding of the corresponding transformer, dotted terminals of the primary-side windings of the three transformers are connected together, and undotted terminals of the secondary-side windings of the three transformers are connected together.

8. The bidirectional resonant conversion circuit according to any one of claims 1 to 4, wherein each transformer (341, 342, 343) comprises one primary-side winding and one secondary-side winding, the third port of each three-port resonant cavity (331, 332, 333) is connected to the primary-side winding of the corresponding transformer, dotted terminals of the primary-side windings of the three transformers are connected together, and dotted terminals of the secondary-side windings of the three transformers are connected together.

9. A converter, comprising a power factor correction PFC circuit and a bidirectional resonant conversion circuit, wherein the power factor correction PFC circuit and the bidirectional resonant conversion circuit are connected in series; wherein the bidirectional resonant conversion circuit is the bidirectional resonant conversion circuit according to any one of claims 1 to 8; and
the power factor correction PFC circuit comprises a power supply module and a power module, wherein
the power supply module is connected to the power module, and the power supply module is configured to provide electric energy for the power module; the power module comprises at least one PFC circuit, each PFC circuit comprises one inductor and one pair of first semiconductor switching transistors, wherein a first end of the inductor is connected to the power supply module, a second end of the inductor is separately connected to two ends of the primary capacitor (31) by using the first semiconductor switching transistors; and
the power supply module comprises an alternating current power supply and two second semiconductor switching transistors, wherein a first end of each second semiconductor switching transistor is connected to the alternating current power supply, and a second end of each second semiconductor switching transistor is connected to one of the pair of first semiconductor switching transistors of the power module.

## Patentansprüche

1. Bidirektionale Resonanzwandlerschaltung, umfassend:
einen Primärkondensator (31), drei Primär-Seiten-Brückenarme (321, 322, 323), drei Dreiport-Resonatoren (331, 332, 333), drei Transformatoren (341, 342, 343), drei Sekundär-Seiten-Brückenarme (351, 352, 353) und einen Sekundärkondensator (36), wobei
zwei Enden jedes Primär-Seiten-Brückenarms (321, 322, 323) jeweils mit zwei Enden des Primärkondensators (31) verbunden sind, sich die drei Primär-Seiten-Brückenarme in eineindeutiger Korrespondenz mit den drei Dreiport-Resonatoren (331, 332, 333) befinden und sich Primär-Seiten-Wicklungen der drei Transformatoren (341, 342, 343) in einer eineindeutigen Korrespondenz mit den drei Dreiport-Resonatoren befinden;
jeder Dreiport-Resonator (331, 332, 333) drei Ports aufweist, ein erster Port jedes Dreiport-Resonators mit einem entsprechenden Primär-Seiten-Brückenarm (321, 322, 323) verbunden ist, ein zweiter Port jedes Dreiport-Resonators mit einem Masseanschluss des entsprechenden Primär-Seiten-Brückenarms verbunden ist und ein dritter Port jedes Dreiport-Resonators mit einem entsprechenden Transformator (341, 342, 343) verbunden ist; und
zwei Enden jedes Sekundär-Seiten-Brückenarms (351, 352, 353) jeweils mit zwei Enden des Sekundärkondensators (36) verbunden sind, sich Sekundär-Seiten-Wicklungen der drei Transformatoren (341, 342, 343) in einer eineindeutigen Korrespondenz mit den drei Sekundär-Seiten-Brückenarmen befinden und jeder Transformator (341, 342, 343) mit einem entsprechenden Sekundär-Seiten-Brückenarm verbunden ist;
wobei jeder Dreiport-Resonator (331, 332, 333) eine erste Gruppe von Induktivität und Kondensator, eine zweite Gruppe von Induktivität und Kondensator und eine dritte Gruppe von Induktivität und Kondensator umfasst, wobei
die erste Gruppe von Induktivität und Kondensator eine zweite Induktivität (L1a) und einen ersten Kondensator (C1a), die in Reihe geschaltet sind, umfasst, ein erstes Ende der ersten Gruppe von Induktivität und Kondensator als der erste Port des Dreiport-Resonators (331, 332, 333) verwendet wird und das erste Ende der ersten Gruppe von Induktivität und Kondensator ein erstes Ende des ersten Kondensators oder ein erstes Ende der ersten Induktivität ist;
die zweite Gruppe von Induktivität und Kondensator eine zweite Induktivität (L2a) und einen zweiten Kondensator (C2a), die in Reihe geschaltet sind, umfasst, ein erstes Ende der zweiten Gruppe von Induktivität und Kondensator als der zweite Port des Dreiport-Resonators (331, 332, 333) verwendet wird und das erste Ende der zweiten Gruppe von Induktivität und Kondensator ein erstes Ende des zweiten Kondensators (C2a) oder ein erstes Ende der zweiten Induktivität (L2a) ist;
die dritte Gruppe von Induktivität und Kondensator eine dritte Induktivität (L3a) und einen dritten Kondensator (C3a), die in Reihe geschaltet sind, umfasst, ein erstes Ende der dritten Gruppe von Induktivität und Kondensator als der dritte Port des Dreiport-Resonators (331, 332, 333) verwendet wird und das erste Ende der dritten Gruppe von Induktivität und Kondensator ein erstes Ende des dritten Kondensators oder ein erstes Ende der dritten Induktivität ist; und
ein zweites Ende der ersten Gruppe von Induktivität und Kondensator, ein zweites Ende der zweiten Gruppe von Induktivität und Kondensator und ein zweites Ende der dritten Gruppe von Induktivität und Kondensator miteinander verbunden sind.

2. Bidirektionale Resonanzwandlerschaltung nach Anspruch 1, wobei jeder Primär-Seiten-Brückenarm (321, 322, 323) zwei Halbleiter-Schalttransistoren (S1, S2, S3, S4) umfasst, die in einer selben Richtung in Reihe geschaltet sind, ein Knoten zwischen den zwei Halbleiter-Schalttransistoren, die sich auf dem Primär-Seiten-Brückenarm befinden und in einer selben Richtung in Reihe geschaltet sind, ein erster Knoten ist und ein erster Port jedes Dreiport-Resonators (331, 332, 333) mit einem ersten Knoten eines entsprechenden Primär-Seiten-Brückenarms verbunden ist.

3. Bidirektionale Resonanzwandlerschaltung nach einem der Ansprüche 1 bis 2, wobei jeder Sekundär-Seiten-Brückenarm (351, 352, 353) zwei Halbleiter-Schalttransistoren umfasst, die in einer selben Richtung in Reihe geschaltet sind, ein Knoten zwischen den zwei Halbleiter-Schalttransistoren, die sich auf dem Sekundär-Seiten-Brückenarm befinden und in einer selben Richtung in Reihe geschaltet sind, ein Sekundärknoten ist und eine Sekundär-Seiten-Wicklung jedes Transformators (341, 342, 343) mit einem zweiten Knoten eines entsprechenden Sekundär-Seiten-Brückenarms verbunden ist.

4. Bidirektionale Resonanzwandlerschaltung nach Anspruch 2 oder 3, wobei der Halbleiter-Schalttransistor (S1, ... S4) ein Metalloxid-Halbleiter-Feldeffekttransistor MOSFET oder ein Bipolartransistor mit isoliertem Gate IGBT ist.

5. Bidirektionale Resonanzwandlerschaltung nach einem der Ansprüche 1 bis 4, wobei jeder Transformator (341, 342, 343) eine Primär-Seiten-Wicklung und eine Sekundär-Seiten-Wicklung umfasst, der dritte Port jedes Dreiport-Resonators (331, 332, 333) mit der Primär-Seiten-Wicklung des entsprechenden Transformators (341, 342, 343) verbunden ist, nicht gepunktete Anschlüsse der Primär-Seiten-Wicklungen der drei Transformatoren miteinander verbunden sind und gepunktete Anschlüsse der Sekundär-Seiten-Wicklungen der drei Transformatoren miteinander verbunden sind.

6. Bidirektionale Resonanzwandlerschaltung nach einem der Ansprüche 1 bis 4, wobei jeder Transformator (341, 342, 343) eine Primär-Seiten-Wicklung und eine Sekundär-Seiten-Wicklung umfasst, der dritte Port jedes Dreiport-Resonators (331, 332, 333) mit der Primär-Seiten-Wicklung des entsprechenden Transformators verbunden ist, nicht gepunktete Anschlüsse der Primär-Seiten-Wicklungen der drei Transformatoren miteinander verbunden sind und gepunktete Anschlüsse der Sekundär-Seiten-Wicklungen der drei Transformatoren miteinander verbunden sind.

7. Bidirektionale Resonanzwandlerschaltung nach einem der Ansprüche 1 bis 4, wobei jeder Transformator (341, 342, 343) eine Primär-Seiten-Wicklung und eine Sekundär-Seiten-Wicklung umfasst, der dritte Port jedes Dreiport-Resonators (331, 332, 333) mit der Primär-Seiten-Wicklung des entsprechenden Transformators verbunden ist, gepunktete Anschlüsse der Primär-Seiten-Wicklungen der drei Transformatoren miteinander verbunden sind und nicht gepunktete Anschlüsse der Sekundär-Seiten-Wicklungen der drei Transformatoren miteinander verbunden sind.

8. Bidirektionale Resonanzwandlerschaltung nach einem der Ansprüche 1 bis 4, wobei jeder Transformator (341, 342, 343) eine Primär-Seiten-Wicklung und eine Sekundär-Seiten-Wicklung umfasst, der dritte Port jedes Dreiport-Resonators (331, 332, 333) mit der Primär-Seiten-Wicklung des entsprechenden Transformators verbunden ist, gepunktete Anschlüsse der Primär-Seiten-Wicklungen der drei Transformatoren miteinander verbunden sind und nicht gepunktete Anschlüsse der Sekundär-Seiten-Wicklungen der drei Transformatoren miteinander verbunden sind.

9. Wandler, der eine Leistungsfaktorkorrektur- bzw. PFC-Schaltung und eine bidirektionale Resonanzwandlerschaltung umfasst, wobei die Leistungsfaktorkorrektur- bzw. PFC-Schaltung und die bidirektionale Resonanzwandlerschaltung in Reihe geschaltet sind, wobei
die bidirektionale Resonanzwandlerschaltung die bidirektionale Resonanzwandlerschaltung nach einem der Ansprüche 1 bis 8 ist; und
die Leistungsfaktorkorrektur- bzw. PFC-Schaltung ein Stromversorgungsmodul und ein Leistungsmodul umfasst, wobei
das Stromversorgungsmodul mit dem Leistungsmodul verbunden ist und das Stromversorgungsmodul dafür ausgelegt ist, elektrische Energie für das Leistungsmodul bereitzustellen; das Leistungsmodul mindestens eine PFC-Schaltung umfasst, jede PFC-Schaltung eine Induktivität und ein Paar von ersten Halbleiter-Schalttransistoren umfasst, wobei ein erstes Ende der Induktivität mit dem Stromversorgungsmodul verbunden ist, ein zweites Ende der Induktivität durch Verwendung der ersten Halbleiter-Schalttransistoren getrennt mit zwei Enden des Primärkondensators (31) verbunden ist; und
das Stromversorgungsmodul eine Wechselstrom-Stromversorgung und zwei zweite Halbleiter-Schalttransistoren umfasst, wobei ein erstes Ende jedes zweiten Halbleiter-Schalttransistors mit der Wechselstrom-Stromversorgung verbunden ist und ein zweites Ende jedes zweiten Halbleiter-Schalttransistors mit einem des Paars von ersten Halbleiter-Schalttransistoren des Leistungsmoduls verbunden ist.

## Revendications

1. Circuit de conversion résonnant bidirectionnel, comprenant :
un condensateur primaire (31), trois branches de pont côté primaire (321, 322, 323), trois cavités résonnantes à trois ports (331, 332, 333), trois transformateurs (341, 342, 343), trois branches de pont côté secondaire (351, 352, 353), et un condensateur secondaire (36), dans lequel
deux extrémités de chaque branche de pont côté primaire (321, 322, 323) sont respectivement connectées à deux extrémités du condensateur primaire (31), les trois branches de pont côté primaire sont en correspondance biunivoque avec les trois cavités résonnantes à trois ports (331, 332, 333), et des enroulements côté primaire des trois transformateurs (341, 342, 343) sont en correspondance biunivoque avec les trois cavités résonnantes à trois ports ;
chaque cavité résonnante à trois ports (331, 332, 333) possède trois ports, un premier port de chaque cavité résonnante à trois ports est connecté à une branche de pont côté primaire correspondante (321, 322, 323), un deuxième port de chaque cavité résonnante à trois ports est connecté à une borne de masse d'une branche de pont côté primaire correspondante, et un troisième port de chaque cavité résonnante à trois ports est connecté à un transformateur correspondant (341, 342, 343) ; et
deux extrémités de chaque branche de pont côté secondaire (351, 352, 353) sont respectivement connectées à deux extrémités du condensateur secondaire (36), des enroulements côté secondaire des trois transformateurs (341, 342, 343) sont en correspondance biunivoque avec les trois branches de pont côté secondaire, et chaque transformateur (341, 342, 343) est connecté à une branche de pont côté secondaire correspondante ;
dans lequel chaque cavité résonnante à trois ports (331, 332, 333) comprend un premier groupe d'inducteur et de condensateur, un deuxième groupe d'inducteur et de condensateur, et un troisième groupe d'inducteur et de condensateur, dans lequel le premier groupe d'inducteur et de condensateur comprend un premier inducteur (L1a) et un premier condensateur (C1a) qui sont connectés en série, une première extrémité du premier groupe d'inducteur et de condensateur est utilisée comme premier port de la cavité résonnante à trois ports (331, 332, 333), et la première extrémité du premier groupe d'inducteur et de condensateur est une première extrémité du premier condensateur ou une première extrémité du premier inducteur ;
le deuxième groupe d'inducteur et de condensateur comprend un deuxième inducteur (L2a) et un deuxième condensateur (C2a) qui sont connectés en série, une première extrémité du deuxième groupe d'inducteur et de condensateur est utilisée comme deuxième port de la cavité résonnante à trois ports (331, 332, 333), et la première extrémité du deuxième groupe d'inducteur et de condensateur est une première extrémité du deuxième condensateur (C2a) ou une première extrémité du deuxième inducteur (L2a) ;
le troisième groupe d'inducteur et de condensateur comprend un troisième inducteur (L3a) et un troisième condensateur (C3a) qui sont connectés en série, une première extrémité du troisième groupe d'inducteur et de condensateur est utilisée comme troisième port de la cavité résonnante à trois ports (331, 332, 333), et la première extrémité du troisième groupe d'inducteur et de condensateur est une première extrémité du troisième condensateur ou une première extrémité du troisième inducteur ; et
une deuxième extrémité du premier groupe d'inducteur et de condensateur, une deuxième extrémité du deuxième groupe d'inducteur et de condensateur, et une deuxième extrémité du troisième groupe d'inducteur et de condensateur sont connectées entre les unes aux autres.

2. Circuit de conversion résonnant bidirectionnel selon la revendication 1, dans lequel chaque branche de pont côté primaire (321, 322, 323) comprend deux transistors de commutation à semi-conducteur (S1, S2, S3, S4) qui sont connectés en série dans une même direction, un nœud entre les deux transistors de commutation à semi-conducteur qui sont sur la branche de pont côté primaire et connectés en série dans la même direction est un premier nœud, et un premier port de chaque cavité résonnante à trois ports (331, 332, 333) est connecté à un premier nœud d'une branche de pont côté primaire correspondante.

3. Circuit de conversion résonnant bidirectionnel selon l'une quelconque des revendications 1 à 2, dans lequel chaque branche de pont côté secondaire (351, 352, 353) comprend deux transistors de commutation à semi-conducteur qui sont connectés en série dans une même direction, un nœud entre les deux transistors de commutation à semi-conducteur qui sont sur la branche de pont côté secondaire et connectés en série dans la même direction est un nœud secondaire, et un enroulement côté secondaire de chaque transformateur (341, 342, 343) est connecté à un deuxième nœud d'une branche de pont côté secondaire correspondante.

4. Circuit de conversion résonnant bidirectionnel selon la revendication 2 ou 3, dans lequel le transistor de commutation à semi-conducteur (S1, ..., S4) est un transistor à effet de champ à semi-conducteur à oxyde de métal, MOSFET, ou un transistor bipolaire à grille isolée, IGBT.

5. Circuit de conversion résonnant bidirectionnel selon l'une quelconque des revendications 1 à 4, dans lequel chaque transformateur (341, 342, 343) comprend un enroulement côté primaire et un enroulement côté secondaire, le troisième port de chaque cavité résonnante à trois ports (331, 332, 333) est connecté à l'enroulement côté primaire du transformateur correspondant (341, 342, 343), des bornes sans pointillé des enroulements côté primaire des trois transformateurs sont connectées ensemble, et des bornes sans pointillé des enroulements côté secondaire des trois transformateurs sont connectées ensemble.

6. Circuit de conversion résonnant bidirectionnel selon l'une quelconque des revendications 1 à 4, dans lequel chaque transformateur (341, 342, 343) comprend un enroulement côté primaire et un enroulement côté secondaire, le troisième port de chaque cavité résonnante à trois ports (331, 332, 333) est connecté à l'enroulement côté primaire du transformateur correspondant, des bornes sans pointillé des enroulements côté primaire des trois transformateurs sont connectées ensemble, et des bornes en pointillé des enroulements côté secondaire des trois transformateurs sont connectées ensemble.

7. Circuit de conversion résonnant bidirectionnel selon l'une quelconque des revendications 1 à 4, dans lequel chaque transformateur (341, 342, 343) comprend un enroulement côté primaire et un enroulement côté secondaire, le troisième port de chaque cavité résonnante à trois ports (331, 332, 333) est connecté à l'enroulement côté primaire du transformateur correspondant, des bornes en pointillé des enroulements côté primaire des trois transformateurs sont connectées ensemble, et des bornes sans pointillé des enroulements côté secondaire des trois transformateurs sont connectées ensemble.

8. Circuit de conversion résonnant bidirectionnel selon l'une quelconque des revendications 1 à 4, dans lequel chaque transformateur (341, 342, 343) comprend un enroulement côté primaire et un enroulement côté secondaire, le troisième port de chaque cavité résonnante à trois ports (331, 332, 333) est connecté à l'enroulement côté primaire du transformateur correspondant, des bornes en pointillé des enroulements côté primaire des trois transformateurs sont connectées ensemble, et des bornes en pointillé des enroulements côté secondaire des trois transformateurs sont connectées ensemble.

9. Convertisseur, comprenant un circuit de correction de facteur de puissance, PFC, et un circuit de conversion résonnant bidirectionnel, dans lequel le circuit de correction de facteur de puissance, PFC, et le circuit de conversion résonnant bidirectionnel sont connectés en série, dans lequel
le circuit de conversion résonnant bidirectionnel est le circuit de conversion résonnant bidirectionnel selon l'une quelconque des revendications 1 à 8 ; et
le circuit de correction du facteur de puissance, PFC, comprend un module d'alimentation électrique et un module de puissance, dans lequel
le module d'alimentation électrique est connecté au module de puissance, et le module d'alimentation électrique est configuré pour fournir de l'énergie électrique au module de puissance ; le module de puissance comprend au moins un circuit PFC, chaque circuit PFC comprend un inducteur et une paire de premiers transistors de commutation à semi-conducteur, dans lequel une première extrémité de l'inducteur est connectée au module d'alimentation électrique, une deuxième extrémité de l'inducteur est connectée séparément à deux extrémités du condensateur primaire (31) en utilisant les premiers transistors de commutation à semi-conducteur ; et
le module d'alimentation électrique comprend une alimentation en courant alternatif et deux seconds transistors de commutation à semi-conducteur, dans lequel une première extrémité de chaque second transistor de commutation à semi-conducteur est connectée à l'alimentation en courant alternatif, et une deuxième extrémité de chaque second transistor de commutation à semi-conducteur est connectée à l'un de la paire de premiers transistors de commutation à semi-conducteur du module de puissance.
